**Europäisches Patentamt**

**European Patent Office**

**Office européen des brevets**

(19)

(11) Veröffentlichungsnummer: **0 300 127 B1**

(12)

# EUROPÄISCHE PATENTSCHRIFT

(45) Veröffentlichungstag der Patentschrift:
13.06.90

(21) Anmeldenummer: 88103528.1

(22) Anmeldetag: 07.03.88

(51) Int. Cl.5: **B65G 13/06**
// B65G23/08

(54) Antriebsrolleneinheit.

(30) Priorität: 21.07.87 DE 3724126

(43) Veröffentlichungstag der Anmeldung:
25.01.89 Patentblatt 89/4

(45) Bekanntmachung des Hinweises auf die Patenterteilung:
13.06.90 Patentblatt 90/24

(84) Benannte Vertragsstaaten:
DE ES FR GB IT

(56) Entgegenhaltungen:
EP-B- 0 149 658
DD-A- 212 936
DE-A- 2 941 661
US-A- 3 698 539

(73) Patentinhaber: BAVARIA CARGO TECHNOLOGIE
GMBH, Kirschstrasse 20, D-8000 München 50(DE)

(72) Erfinder: Huber, Thomas, Schechen 2a,
D-8127 Iffeldorf(DE)

(74) Vertreter: Uri, Peter Alexander, Dipl.-Ing. et al,
Patentanwälte Strohschänk, Uri & Strasser innere
Wiener Strasse 8, D-8000 München 80(DE)

ACTORUM AG

## Beschreibung

Die Erfindung betrifft eine Antriebsrolleneinheit zum Antrieb von Gegenständen auf einer Förderbahn, mit einer von einer Elektromotoranordnung über eine Getriebeanordnung drehend antreibbaren Antriebsrolle, welche drehbar an einer Führungseinrichtung gelagert ist, mittels der sie bezüglich einer Basis zwischen einer unteren Ruhestellung und einer oberen Antriebsstellung, in der sie mit der Unterseite des anzutreibenden Gegenstands in Eingriff steht, bewegbar ist, wobei die Getriebeanordnung ein von der Elektromotoranordnung antreibbares Antriebszahnrad umfaßt, das mit einer an der Antriebsrolle drehfest angebrachten Verzahnung kämmt, und wobei die Drehachse des Antriebszahnrads bezüglich der Basis ortsfest angeordnet ist.

Derartige Antriebsrolleneinheiten werden beispielsweise zum Antrieb von auf Rollenförderbahnen und Kugelförderbahnen bewegbaren Frachtbehältern eingesetzt. Ein bevorzugtes Anwendungsgebiet sind Frachtladesysteme im Luftfrachtverkehr, bei denen die Behälter im Laderaum eines Flugzeugs auf Rollen- oder Kugelförderbahnen an die vorgesehenen Verankerungsplätze transportiert werden.

Eine Antriebsrolleneinheit der eingangs genannten Art ist in der US-PS 3 698 539 beschrieben. Diese bekannte Einheit weist einen am Boden des Frachtraums zu befestigenden Grundrahmen und ein an einem Ende schwenkbar am Grundrahmen gelagertes Lagergestell auf, das in der Nähe der Schwenkachse einen Motor trägt und im Abstand zur Schwenkachse eine drehbar, jedoch bezüglich des Lagergestells ortsfest gelagerte Antriebsrolle, sowie eine mit dem freien Ende des Lagergestells verbundene Nockensteueranordnung, mittels der das Lagergestell bezüglich des Grundrahmens aus der Ruhestellung in die Arbeitsstellung verschwenkbar ist. Die Abtriebswelle des Motors ist über einen Getriebezug mit dem Eingang eines Planetengetriebes gekoppelt, dessen einer Ausgang über eine Getriebeanordnung mit der Antriebswelle der Antriebsrolle gekoppelt ist, während der andere Ausgang des Planetengetriebes die Nockensteuereinheit antreibt.

Im Ruhezustand liegt das Lagergestell auf dem Grundrahmen auf, so daß die Antriebsrolle abgesenkt im Abstand zum Boden eines darüber auf einer Rollförderbahn herangeführten Frachtbehälters steht. Um den Frachtbehälter auf der Rollenbahn in Bewegung zu setzen, wird zunächst der Motor eingeschaltet, der den Eingang des Planetengetriebes antreibt. Zu diesem Zeitpunkt wird die Antriebsrolle mittels einer Rutschkupplung mit einem vorbestimmten Bremsdrehmoment gegen Drehung festgehalten, so daß das Antriebsmoment des Motors zwangsläufig über den anderen Ausgang des Planetengetriebes auf die Nockensteuereinheit einwirkt, die dadurch mit ihren Nocken, die sich an dem Grundrahmen abstützen, das Lagergestell nach oben in die Arbeitsstellung schwenkt, bis die Antriebsrolle in Eingriff mit der Unterseite des Bodens des Frachtbehälters gelangt. Wegen des Gewichts des Frachtbehälters wird dadurch die Bewegung der Nockensteuereinheit blockiert und die Antriebsrolle wird gegen den Behälterboden gedrückt. Dadurch aber wird auch der die Nockensteuereinheit treibende Ausgang des Planetengetriebes blockiert, so daß der die Antriebsrolle antreibende andere Ausgang des Planetengetriebes an die Antriebsrolle ein Drehmoment überträgt, das das Bremsdrehmoment der Rutschkupplung überwindet, so daß die an dem Behälterboden angedrückte Antriebsrolle sich zu drehen beginnt und der Behälter in einer von der Drehrichtung des Antriebsmotors abhängigen Richtung vorwärts bewegt wird.

Problematisch ist dabei in der Praxis, daß die gesamte Getriebeanordnung vom Motor zur Antriebsrolle einerseits und zur Nockensteuerung andererseits sehr aufwendig gestaltet ist und viele Teile aufweist. Überdies ist eine Nockensteuerung erforderlich, so daß der Gesamtaufbau eine große Anzahl von mechanisch bewegten Teile enthält. Dadurch ergeben sich nicht nur bei der Herstellung hohe Kosten, sondern auch ein im Flugzeugbau höchst unerwünschtes hohes Gewicht und eine große Bauform. Zudem führt die große Anzahl von zueinander bewegten Teilen zu einer unerwünschten Verschleißanfälligkeit und es sind kurze Wartungsintervalle erforderlich, um die im Flugzeugbetrieb geforderte hohe Zuverlässigkeit zu gewährleisten.

Überdies wird bei dieser Antriebsrolleneinheit als Rutschkupplung eine sogenannte Fluid-Reibungskupplung verwendet, deren Betriebsverhalten sehr temperaturabhängig ist. Aufgrund der im Betrieb im Frachtraum eines Flugzeugs auftretenden hohen Temperaturunterschiede ist es daher erforderlich, das maximale Drehmoment der Rutschkupplung so hoch zu wählen, daß auch bei den ungünstigsten Temperaturen der erforderliche Minimalwert nicht unterschritten wird. Dadurch aber ergeben sich hohe Kraftspitzen beim Einsetzen der Drehung der an den Behälterboden angedrückten Antriebsrolle, welche auf die Bodenstruktur des Flugzeug-Frachtraumes einwirken. Dies ist in der Praxis außerordentlich unerwünscht, da bestimmte Grenzbelastungen der Bodenstruktur nicht überschritten werden dürfen und überdies Stoßbelastungen äußerst unerwünscht sind.

Vor allem aber weist die bekannte Antriebsrolleneinheit eine recht große Bauform auf und die einzelnen Bauteile liegen mehr oder weniger ungeschützt nebeneinander, so daß im Betrieb nicht nur mit Verschmutzungen und dadurch hervorgerufenen Betriebsstörungen zu rechnen ist, sondern auch mit Beschädigungen durch eingedrungene Gegenstände oder durch direkte Krafteinwirkung.

Eine von Aufbau und Betriebsweise ähnliche Antriebsrolleneinheit ist ferner aus EP-B1-0 149 658 bekannt, bei der neben großer Bauform ebenfalls im Betrieb Probleme durch eindringende Fremdkörper oder durch Gewalteinwirkung auftreten können.

Die der Erfindung zugrundeliegende Aufgabe besteht somit darin, eine Antriebsrolleneinheit der eingangs genannten Gattung zu schaffen, die bei kompakterer Bauform und geringerem Gewicht gegen Verschmutzung und Beschädigung geschützt ist.

Gemäß der Erfindung wird diese Aufgabe bei einer Antriebsrolleneinheit der eingangs genannten Gattung dadurch gelöst, daß die Antriebsrolle im wesentlichen als hohler Kreiszylinder ausgebildet ist, daß die Elektromotoranordnung und die Getriebeanordnung im Inneren der hohlzylindrischen Antriebsrolle angeordnet sind, daß der Rotor der Elektromotoranordnung mit dem Antriebszahnrad zu dessen Antrieb gekoppelt ist, daß die Statoranordnung der Elektromotoranordnung als Führungseinrichtung eine kreiszylindrische Außenumfangsfläche besitzt, die exzentrisch zur Drehachse des Antriebszahnrads angeordnet ist und den Rotor umgibt, daß die hohlzylindrische Antriebsrolle auf der Außenumfangsfläche der Statoranordnung konzentrisch zu dieser drehbar gelagert ist, und daß an der Innenseite der hohlzylindrischen Antriebsrolle ein dazu konzentrischer Innenzahnkranz drehfest angebracht ist, welcher mit dem dazu exzentrischen Antriebszahnrad kämmt und von diesem gleichsinnig angetrieben ist.

Bei dieser erfindungsgemäßen Ausgestaltung sind also alle bewegten Teile, die Getriebeanordnung, der Antriebsmotor und die Führungseinrichtung im Inneren der hohlzylindrischen Antriebsrolle untergebracht, so daß alle diese Elemente gegen Verschmutzung und Beschädigung geschützt sind.

Zudem ergibt sich eine beträchtlich verkleinerte Bauform, da ja alle Bestandteile im Inneren der eigentlichen Antriebsrolle untergebracht sind, die ihrerseits den Abmessungen der Antriebsrolle der herkömmlichen Antriebsrolleneinheiten entspricht. Auch das Gewicht ist dadurch entsprechend vermindert.

Besonders vorteilhaft ist es bei der erfindungsgemäßen Ausgestaltung, daß die gesamte Antriebsrolleneinheit in ihren Außenabmessungen gerade den einzelnen nicht angetriebenen Tragrollen einer Rollenförderbahn gleicht und daher in einer Rollenförderbahn an beliebigen Plätzen entsprechend den jeweiligen Anforderungen austauschbar gegen eine Tragrolle eingesetzt werden kann.

Wenn durch Stromzufuhr zu der Elektromotoranordnung die erfindungsgemäße Antriebsrolleneinheit in Betrieb gesetzt wird, wirkt zwischen dem Rotor und der Statoranordnung der Elektromotoranordnung ein Drehmoment. Wegen der Eigenträgheit des massiven Rotors verharrt dieser jedoch zunächst im Stillstand, so daß das Motordrehmoment die Statoranordnung um die bezüglich der Basis ortsfeste Drehachse des Antriebszahnrades dreht. Dadurch wird wegen der zur Drehachse des Antriebszahnrades exzentrischen Statoranordnung die darauf gelagerte Antriebsrolle aus ihrer unteren Ruhestellung in die obere Arbeitsstellung bewegt, in der sie zur Anlage am Boden eines darüber befindlichen Gegenstandes gelangt. Die Statoranordnung kann sich daher nicht mehr weiter drehen, so daß das Motordrehmoment die Eigenträgheit des Rotors überwindet und dieser sich zu drehen beginnt. Diese Drehung des Rotors wird auf das Antriebszahnrad übertragen, das mit der Innenverzahnung der Antriebsrolle kämmt und diese daher gleichsinnig in Drehung versetzt. Da die Antriebsrolle gegen den Boden des Gegenstands gedrückt ist, wird eine tangentiale Förderkraft auf ihn ausgeübt, so daß er sich in der gewünschten Weise auf der Rollenbahn in Bewegung setzt.

Bevorzugt ist vorgesehen, daß der Rotor über ein Untersetzungsgetriebe mit dem Antriebszahnrad gekoppelt ist. Dadurch wird erreicht, daß ein üblicher Elektromotor in seinem wirkungsgradmäßig günstigen hohen Drehzahlbereich eingesetzt werden kann und dennoch die gewünschte niedrige Drehzahl der Antriebsrolle erzielbar ist.

Besonders vorteilhaft ist es, wenn das Untersetzungsgetriebe ein mit drei in Richtung der Drehachse des Antriebszahnrads axial aufeinanderfolgenden Getriebestufen ausgebildetes Planetengetriebe ist. Eine derartige Getriebeanordnung zeichnet sich durch eine sehr geringe Bauform mit insbesondere in radialer Richtung geringen Abmessungen aus, wobei zusätzlich noch ein sehr hohes Untersetzungsverhältnis erreichbar ist.

Das Anheben der Antriebsrolle aus ihrer Ruhestellung in ihre Arbeitsstellung am Behälterboden erfolgt zwar bei der erfindungsgemäßen Ausführung beim Einschalten der Elektromotoranordnung dadurch, daß der Rotor eine erhebliche Eigenträgheit besitzt und überdies durch die Trägheit der Getriebeanordnung und deren Reibung gegen Drehung abgebremst wird, doch ist es vorteilhaft, wenn zusätzlich eine das Antriebszahnrad bezüglich der Basis bremsende Bremse vorgesehen ist. Durch diese Bremse wird sichergestellt, daß unabhängig von Herstellungstoleranzen und der von allerlei Einflüssen abhängigen Eigenreibung der Getriebeanordnung in jedem Fall beim Einschalten zuerst die Antriebsrolle in ihre Arbeitsstellung angehoben und gegen den darauf befindlichen Gegenstand angedrückt wird, bevor die eigentliche Drehung der Antriebsrolle einsetzt.

Besonders vorteilhaft ist es, wenn die Bremse als mechanische Rollenreibungsbremse ausgebildet ist, da eine derartige Rollenreibungsbremse ein praktisch drehzahl- und temperaturunabhängiges Bremsmoment liefert.

Eine bevorzugte Ausführungsform sieht vor, daß die Statoranordnung aus einem die Statorwicklung enthaltenden, zum Rotor koaxial und rotationssymmetrisch ausgebildeten Statorkörper und einem diesen umschließenden exzentrisch zum Rotor geformten Statorgehäuse besteht, auf dessen im Querschnitt kreisförmiger Umfangsoberfläche die Antriebsrolle gelagert ist. Durch diese zweiteilige Gestaltung der Statoranordnung ist es möglich, für den eigentlichen Statorkörper und den Rotor handelsübliche Komponenten eines Elektromotors einzusetzen. Lediglich das Statorgehäuse muß dann entsprechend der geforderten Exzentrität als spezielles Bauteil angefertigt werden.

Bevorzugt ist dabei vorgesehen, daß das äußerlich kreiszylindrische Statorgehäuse von einer axialen, zur Hohlzylinderachse exzentrischen Bohrung durchsetzt ist, in der einerseits der Statorkörper aufgenommen ist, während der freie Teil der Innenwand dieser Bohrung mit einer Innenverzahnung versehen ist, die als Kronenrad des Untersetzungsgetriebes dient. Dieses Statorgehäuse ist damit gleichermaßen als integraler Bestandteil des Untersetzungsgetriebes ausgebildet, so daß sich eine Einsparung an mechanischen Teilen und ein geringeres Gewicht ergibt.

Besonders günstig ist es in der Praxis, daß die Elektromotoranordnung als Drehstromsynchronmotor ausgebildet ist. Es wird dadurch ein hohes Anlaufdrehmoment bei geringer Baugröße sichergestellt.

Eine bevorzugte Ausführungsform sieht vor, daß die Stromzuführung zur Statorwicklung über mehrere konzentrische Schleifringe erfolgt, die mit bezüglich der Basis ortsfesten, feder-vorgespannten Kontaktkörpern zusammenwirken. Diese Kontaktkörper sind elektrisch mit entsprechenden Stromzuführungsleitern in der Struktur einer Rollenförderbahn verbindbar.

Bevorzugt ist es ferner, daß die Antriebsrolle aus einem inneren, den Innenzahnkranz und die Lagerlaufflächen der Lager tragenden metallischen Rollenkörper und einem auf dessen Außenumfangsoberfläche angebrachten Rollenmantel aus abriebfestem Kunststoff, insbesondere aus Styrol-Butadien-Kautschuk mit einer Shore-Härte von etwa 60 Shore-A, besteht. Auf diese Weise wird sichergestellt, daß die Antriebsrolle eine zwar elastische, jedoch im Betrieb äußerst dauerhafte und verschleißfeste Oberfläche besitzt, wobei dennoch der einen Bestandteil der Getriebeanordnung darstellende Innenzahnkranz unmittelbar im Rollenkörper geformt werden kann, so daß sich eine Einsparung von Gewicht und Bauteilen ergibt.

Die Erfindung wird im folgenden beispielsweise unter Bezugnahme auf die Zeichnung näher erläutert; es zeigt:

Fig. 1 einen axialen Längsschnitt einer sehr vereinfachten und schematisierten Antriebsrolleneinheit zur Erläuterung des grundsätzlichen Aufbaus und der Funktionsweise einer erfindungsgemäßen Antriebsrolleneinheit;

Fig. 2 eine Ansicht gemäß der Schnittlinie I-I der Fig. 1 , wobei die Antriebsrolle in ihrer Ruhestellung dargestellt ist;

Fig. 3 eine der Fig. 2 ähnliche Ansicht, wobei jedoch die Antriebsrolle in ihrer an den Gegenstand angedrückten oberen Arbeitsstellung dargestellt ist;

Fig. 4 einen axialen Längsschnitt durch eine Ausführungsform der erfindungsgemäßen Antriebsrolleneinheit, die in ein Profil einer Rollenförderbahn eingesetzt ist;

Fig. 5 einen Radialquerschnitt entlang der Linie III-III der Fig. 4;

Fig. 6 einen Radialquerschnitt entlang der Linie II-II der Fig. 4;

Fig. 7 eine Teildarstellung des in der Fig. 4 rechten Teils der Antriebsrolleneinheit in vergrößertem Maßstab, wobei die Teile der Rollenförderbahn weggelassen sind; und

Fig. 8 eine der Fig. 5 ähnliche Schnittdarstellung, wobei die Antriebsrolleneinheit bezüglich des als Basis dienenden Profils der Rollenförderbahn in ihrer Ruhestellung in durchgezogenen Linien gezeigt ist und mit strichpunktierten Linien in ihrer angehobenen Arbeitsstellung angedeutet ist.

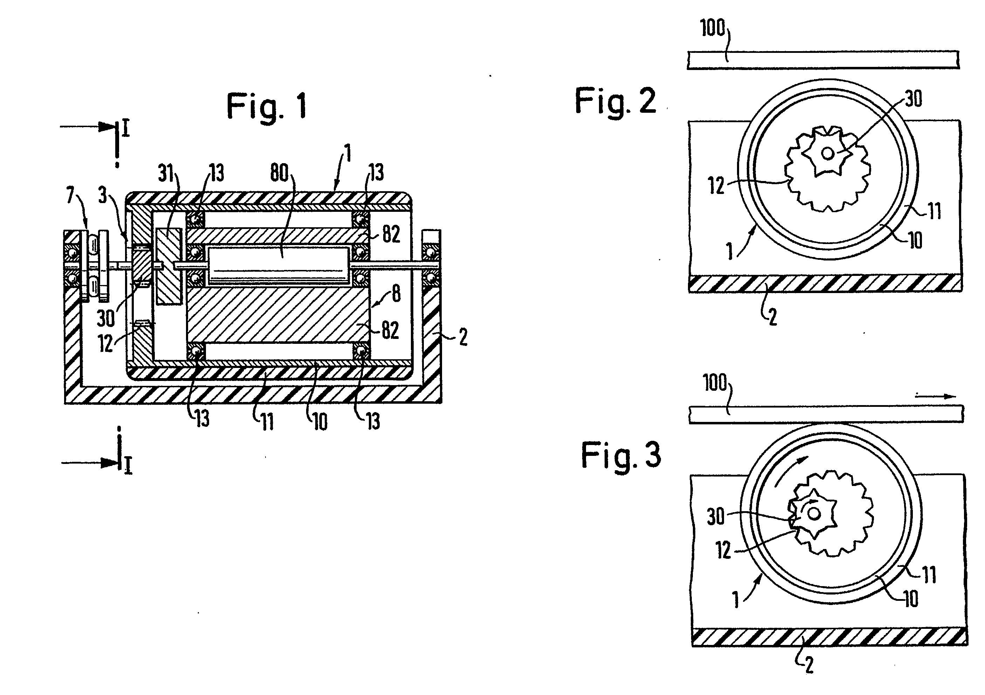

Mit Bezug auf die Fig. 1 bis 3 werden zunächst der grundsätzliche Aufbau und die Funktionsweise einer erfindungsgemäßen Antriebsrolleneinheit erläutert. Diese Fig. 1 bis 3 sind zum Zwecke der Erläuterung sehr stark vereinfacht und schematisiert.

Wie in der Fig. 1 gezeigt ist, besteht die Antriebsrolleneinheit grundsätzlich aus einer in etwa als hohler Kreiszylinder ausgebildeten Antriebsrolle 1, in deren Innenraum eine Motoranordnung 8 aufgenommen ist, die über eine Getriebeanordnung 3 antriebsmäßig mit der Antriebsrolle 1 gekoppelt ist. Die gesamte Antriebsrolleneinheit ist in einem nach oben offen U-förmigen Profil einer Rollenförderbahn aufgenommen, das als Basis 2 dient.

Die Elektromotoranordnung 8 umfaßt eine Statoranordnung 82 und einen bezüglich der Basis 2 und bezüglich der Statoranordnung 82 drehbar gelagerten Rotor 80, dessen Rotorwelle ein schematisch als Kasten in der Fig. 1 dargestelltes Untersetzungsgetriebe 31 antreibt, dessen Ausgangswelle ihrerseits drehfest ein Antriebszahnrad 30 trägt, dessen Drehachse bezüglich der Basis 2 ortsfest angeordnet ist.

Die Statoranordnung 82 der Elektromotoranordnung 8 enthält (in der Zeichnung nicht dargestellte) Feldwicklungen und umschließt im engen radialen Abstand in der bekannten Weise eines Elektromotors den Rotor 80. Anders als bei herkömmlichen Elektromotoren ist jedoch der Außenumfang der Statoranordnung 82 bezüglich der Drehachse des Rotors 80 zwar im Querschnitt kreisförmig, jedoch exzentrisch zur Drehachse des Rotors und insbesondere exzentrisch zur Rotationsachse des Antriebszahnrads 30 ausgebildet.

Die Antriebsrolle 1 besteht aus einem inneren, im wesentlichen als Hohlzylinder ausgebildeten Rollenkörper 10 und einem die Außenoberfläche des Rollenkörpers 10 bedeckenden Rollenmantel 11 aus elastischem Material. In der Nähe eines axialen Stirnendes (links in der Fig. 1) ist an der inneren Oberfläche des Rollenkörpers 10 ein Innenzahnkranz 12 geformt, der konzentrisch mit dem Rollenkörper 10 ausgebildet ist und mit dem dazu exzentrischen Antriebszahnrad 30 in kämmendem Eingriff steht. Die Antriebsrolle 1 ist mittels den Lagern 13, die als Nadel- oder Kugellager ausgebildet sind, konzentrisch auf und zu der kreiszylindrischen Außenoberfläche der Statoranordnung 82 drehbar gelagert, so daß einerseits der kämmende Eingriff des Antriebszahnrades 30 mit dem Innenzahnkranz 12 ständig sichergestellt ist und zugleich die exzentrische Anordnung der Antriebsrolle 1 und des Innenzahnkranzes 12 bezüglich der Drehachse des Antriebszahnrades 30 aufrechterhalten wird.

Die Fig. 2 zeigt die Ruhestellung der Antriebsrolle gemäß der Fig. 1 und den exzentrischen Eingriff des Antriebszahnrades 30 mit dem Innenzahnkranz 12 der Antriebsrolle 1. Ferner ist zu sehen, daß wegen dieser Exzentrizität die obere Außenumfangsfläche der Antriebsrolle 1 in diesem Ruhezustand im Abstand zu einem darüber auf der Förderbahn befindlichen Gegenstand 100 steht.

Wenn nun ausgehend von diesem Ruhezustand die Stromzufuhr zur Elektromotoranordnung 8 eingeschaltet wird, wirkt zwischen dem Rotor 80 und der Statoranordnung 82 wie bei jedem anderen Elektromotor ein Drehmoment. Wegen der erheblichen Eigenträgheit des massiven Rotors 80, der Eigenträgheit der Teile des Untersetzungsgetriebes 31, der Eigenträgheit der Getriebeanordnung 3 und der Eigenträgheit der Antriebsrolle 1 sowie der Reibungskräfte in der Getriebeanordnung 3 und dem Untersetzungsgetriebe 31, verharrt jedoch zunächst der Rotor 80 stillstehend in Ruhe und das Drehmoment der Motoranordnung 8 bewirkt daher, daß sich die Statoranordnung 82 entgegen der vorgesehenen Drehrichtung des Rotors 80 dreht, so daß sein exzentrischer Teil sich um die Drehachse des Antriebszahnrads 30 nach oben dreht und dadurch die Antriebsrolle 1 mit nach oben bewegt wird, bis sie an die Unterseite des auf der Förderbahn befindlichen Gegenstands 100 anstößt, wie in der Fig. 3 gezeigt. Wegen des Gewichts dieses Gegenstands 100 wird die Weiterbewegung der Antriebsrolle 1 blockiert, so daß sich auch die Statoranordnung 82 nicht mehr weiterdrehen kann und deshalb nun entgegen den vorstehend erläuterten Hemmkräften sich der Rotor 80 in Drehung versetzen muß. Diese Drehung des Rotors 80 wird über das Untersetzungsgetriebe 31 auf das Antriebszahnrad 30 gleichsinnig übertragen und dieses Antriebszahnrad 31 treibt nun gleichsinnig den Innenzahnkranz 12 und damit die Antriebsrolle 1 an, wie durch die Pfeile in der Fig. 3 gezeigt. Die Drehung der Antriebsrolle, die gegen die Unterseite des Gegenstands angedrückt ist, übt eine Tangentialkraft auf den Gegenstand 100 aus, so daß sich dieser in Richtung des über ihm angeordneten Pfeiles in der Fig. 3 in Bewegung setzt.

Wenn nun in diesem Zustand die Stromzuführung zur Elektromotoranordnung 8 abgeschaltet wird, kommt der Rotor 80 zum Stillstand und die Statoranordnung 82 mit der darauf gelagerten Antriebsrolle sinken aufgrund ihres exzentrischen Eigengewichts durch Schwenkbewegung um das Antriebszahnrad 30 herum wieder nach unten in die in der Fig. 2 gezeigte Ruhestellung außer Eingriff mit dem Gegenstand 100.

Wie in der Fig. 1 gezeigt ist, kann bei der beschriebenen Anordnung zusätzlich noch eine Bremse 7 vorgesehen sein, die zwischen der Basis 2 und dem Antriebszahnrad 30 ein Bremsmoment wirken läßt. Diese Bremse dient dazu, den anfänglichen Stillstand des Rotors 80 beim Einschalten der Stromzufuhr zur Elektromotoranordnung 8 in der Ruhestellung der Antriebsrolle 1 zu unterstützen. Diese Bremse ist zwar nicht unbedingt notwendig, sie sorgt jedoch für ein definiertes Bremsmoment, das auf den Rotor 80 einwirkt, damit Herstellungstoleranzen und Betriebseinwirkungen auf die Eigenreibung der Getriebeanordnung 3 und des Untersetzungsgetriebes 31 für die Funktionstüchtigkeit der Antriebsrolleneinheit außer Betracht bleiben können. Ferner ist es durch diese Bremse 7 möglich, das die Eigenträgheit des Rotors 80, des Untersetzungsgetriebes 31, der Getriebeanordnung 3 und der Antriebsrolle 1 mitbestimmende Gewicht gering zu halten. Die Bremse ist, wie schematisch angedeutet, als mechanische Rollenreibungsbremse ausgebildet, bei der zwischen zueinander drehbaren Bremsscheiben eine Vielzahl von Bremsrollen federvorgespannt und über den Umfang der Bremsscheiben verteilt angeordnet ist.

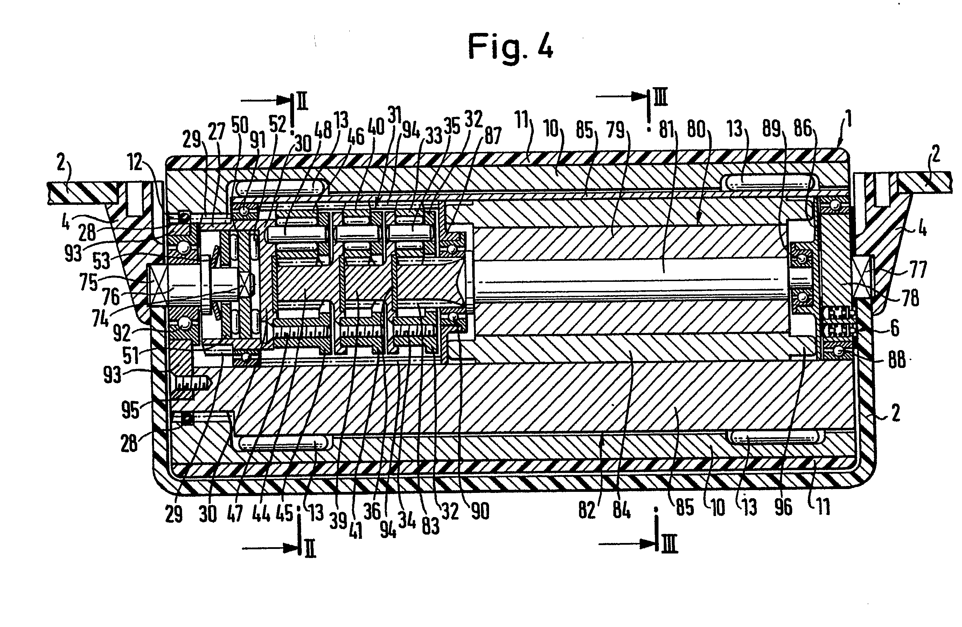

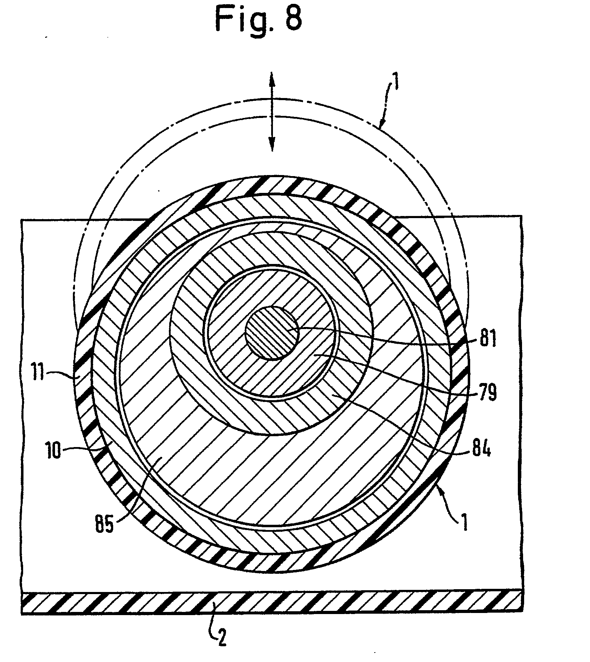

Nachstehend wird nun mit Bezug auf die Fig. 4 bis 8 eine in vielen Einzelheiten vereinfacht dargestellte praktische Ausführungsform der erfindungsgemäßen Antriebsrolleneinheit beschrieben. Wie die Fig. 4 im axialen Längsschnitt zeigt, ist die Antriebsrolleneinheit in einem als Basis 2 dienenden rinnenförmigen, im Querschnitt nach oben offenen U-förmigen Profil einer Rollenförderbahn aufgenommen und in dieser Basis 2 an beiden in der Zeichnung rechts bzw. links gelegenen axialen Enden mittels Schnapphaltern 4 gehalten, welche in entsprechend geformte Öffnungen im Profil der Rollenförderbahn eingerastet sind. Eine derartige Rollenförderbahn mit diesen Schnapphaltern 4 ist ausführlich in der gleichzeitig eingereichten Patentanmeldung der gleichen Anmelderin mit dem Titel "Rollenförderbahn" beschrieben, auf die hiermit voll inhaltlich Bezug genommen wird.

Wie insbesondere in der Fig. 4 gezeigt ist, umfaßt diese Ausführungsform der Antriebsrolleneinheit eine äußere Antriebsrolle 1, eine darin aufgenommene Elektromotoranordnung mit einer Statoranordnung 82 und einem Rotor 80. Die Statoranordnung 82 enthält den eigentlichen Statorkörper 84 mit der nur andeutungsweise dargestellten Statorwicklung 96. Dieser Statorkörper 84 ist in herkömmlicher Weise in etwa rotationssymmetrisch aufgebaut und umgibt im geringen Abstand konzentrisch den Rotor 80. Ferner umfaßt die Statoranordnung 82 ein Statorgehäuse 85, dessen Außenumfangsfläche in etwa einen Kreiszylinder darstellt und das von einer zur Achse dieses Kreiszylinders exzentrischen Durchgangsbohrung durchsetzt ist. In dieser exzentrischen Durchgangsbohrung ist drehfest mit dem Statorgehäuse 85 verbunden der Statorkörper 84 aufgenommen, der sich jedoch nur durch einen Teil dieser Bohrung erstreckt (in der Fig. 4 rechts gelegener Teil). Nahe des in der Fig. 4 rechts gelegenen Endes der Bohrung ist ein radialer Lagerflansch 86 vorgesehen, der drehfest mit dem Statorgehäuse 85 verbunden ist und ein zum Rotor 80 konzentrisches Wälzlager 89 trägt. Axial gesehen außerhalb dieses Lagerflansches 86 ist angrenzend an das rechte axiale Ende des Statorgehäuses 85 innerhalb der Bohrung ein weiteres Wälzlager 88 konzentrisch zum Wälzlager 89 angeordnet. Etwa in der Mitte der das Statorgehäuse 85 durchsetzenden Bohrung ist ferner ein weiterer Lagerflansch 87 angeordnet, der drehfest mit dem Statorgehäuse 85 verbunden ist und ein zur Bohrung konzentrisches Wälzlager 90 trägt.

An der in der Fig. 4 linken Stirnfläche des Statorgehäuses ist bündig abschließend mit dieser mit Bolzen 95 ein weiterer radialer Lagerflansch 93 befestigt, der zentrisch zur Längsachse der Bohrung des Statorgehäuses 85 ein Wälzlager 92 trägt. Schließlich ist nahe des in der Fig. 4 linken Stirnendes, jedoch im Abstand zu diesem innerhalb der Bohrung des Statorgehäuses 85 noch ein Wälzlager 91 angeordnet, das ebenfalls konzentrisch zu dieser Bohrung liegt.

Das Wälzlager 88 an der rechten Stirnseite der Statoranordnung 82 sitzt auf einer Lagerscheibe 78, so daß die gesamte Statoranordnung 82 auf dieser Lagerscheibe 78 frei drehbar ist. Diese Lagerscheibe 78 ist mit einem axial nach außen (nach rechts in der Fig. 4) ragenden Vierkantansatz 77 ausgestattet, der zur Halterung der gesamten Antriebsrolleneinheit in der Basis 2 mittels des Schnapphalters 4 dient. Das Wälzlager 92 an der linken Stirnseite des Statorgehäuses 85 sitzt auf einem weiteren Lagerzapfen 76, und lagert das Statorgehäuse 85 drehbar auf diesem Lagerzapfen 76. Der Lagerzapfen 76 ist mit einem nach außen (nach links in der Fig. 4) ragenden Vierkantansatz 75 versehen, der in gleicher Weise wie der Vierkantansatz 77 zur Halterung der gesamten Antriebsrolleneinheit in der Basis 2 mittels eines Schnapphalters 4 dient.

Innerhalb des drehfest mit dem Statorgehäuse 85 verbundenen Statorkörpers 84 ist in herkömmlicher Weise der Rotor 80 der Elektromotoranordnung aufgenommen. Dieser Rotor besteht aus einem Rotorkörper 79, der zentrisch und drehfest auf einer Rotorwelle 81 sitzt, die sich an beiden Stirnseiten des Rotorkörpers 79 über diesen hinaus erstreckt. Das in der Fig. 4 links nach außen ragende Ende der Rotorwelle 81 ist drehbar bezüglich des Statorgehäuses 85 mittels des Wälzlagers 90 gelagert, während der rechts aus dem Rotorkörper 79 herausragende Teil der Rotorwelle 81 mittels des Wälzlagers 89 drehbar gelagert ist.

Die Antriebsrolle 1 ist im wesentlichen als hohler Kreiszylinder ausgebildet, der die Statoranordnung 82 umgibt. Die Antriebsrolle 1 besteht aus sinem Rollenkörper 10 und einem die Außenfläche des Rollenkörpers 10 bedeckenden Rollenmantel 11, der fest mit dem Rollenkörper 10 verbunden ist. Der Rollenmantel besteht aus einem abriebfestem elastischen Kunststoff, insbesondere aus Styrol-Butadien-Kautschuk mit einer Härte von etwa 60 Shore-A, während der Rollenkörper 11 aus Metall geformt ist. In der Nähe der beiden axialen Stirnenden des Rollenkörpers 10 ist jeweils an der Innenseite des Rollenkörpers 10 ein Wälzlager 13, vorzugsweise ein Nadellager angeordnet, das den Rollenkörper 10 drehbar auf der zylindrischen Außenfläche des Statorgehäuses 85 lagert. Der an die in der Fig. 4 linke Stirnseite angrenzende Bereich des Rollenkörpers 10 ist mit radial nach innen ragend größerer radialer Dicke ausgestattet, án dessen Innenfläche ein Innenzahnkranz 12 konzentrisch zur Längsachse des hohlzylindrischen Rollenkörpers 10 geformt ist. Im Bereich dieses Innenzahnkranzes 12 ist eine Umfangsnut geformt, in welcher ein O-Ring 28 aufgenommen ist, der gegen die benachbarte Außenumfangsfläche des Statorgehäuses 85 bzw. des daran befestigten Lagerflansches 93 abdichtet.

Innerhalb der das Statorgehäuse 85 durchsetzenden Bohrung ist in der Fig. 4 links von dem die Rotorwelle 81 lagernden Lagerflansch 87 als Untersetzungsgetriebe 31 ein Planetengetriebe mit drei in Axialrichtung aufeinanderfolgenden Getriebestufen vorgesehen. Dieses Planetengetriebe ist von seiner Funktion her in herkömmlicher Weise aufgebaut, so daß für den Fachmann die kurze folgende Beschreibung genügen wird. Das Planetengetriebe umfaßt in der ersten Stufe einen Planetenträger 32, an dem mittels Lagerzapfen 35 drei Planetenräder 33 gelagert sind, die auf einem Sonnenrad umlaufen, welches durch eine Außenverzahnung 83 auf dem linken Ende der Rotorwelle 81 gebildet ist.

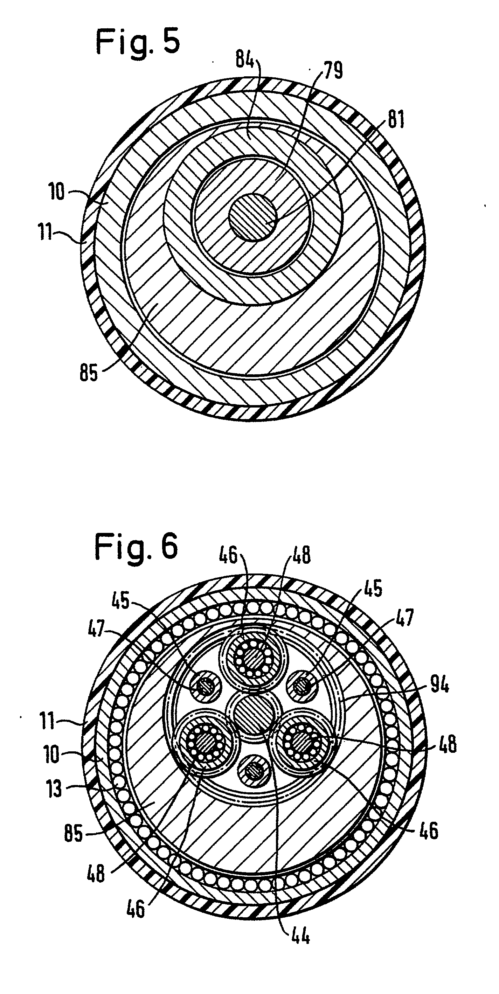

Das in der Fig. 4 links gelegene Ende des Lagerzapfens 35 ist jeweils in einem radialen Flansch des Sonnenrades 39 der zweiten Getriebestufe gelagert, wobei dieser Flansch mittels Bolzen 34 am Planetenträger 32 der ersten Stufe festgelegt ist. Die Planetenräder 40 der zweiten Stufe sind ähnlich wie bei der ersten Stufe auf Lagerzapfen einerseits im zugehörigen Planetenträger 41 und andererseits in einem radialen Flansch des Sonnenrades 44 der dritten Getriebestufe gelagert. Auch die dritte Getriebestufe besitzt Planetenräder 46, die einerseits im zugehörigen Planetenträger 45 gelagert sind und andererseits in einem sich links in der Fig. 4 an das Sonnenrad 44 axial anschließenden radialen Flansch eines als Ausgang der dritten Getriebestufe dienenden Antriebszahnrades 30 gelagert sind. Dieser radiale Flansch des Antriebszahnrads 30 ist mittels der Bolzen 47 mit dem Planetenträger 45 der dritten Getriebestufe fest verbunden. Im gesamten Bereich dieses Untersetzungsgetriebes 31 ist die Innenwand des Statorgehäuses 85 mit einer Innenverzahnung 94 ausgestattet, die mit den Planetenrädern 33, 40 und 46 kämmt, wie beispielsweise für die dritte Getriebestufe aus der Fig. 6 ersichtlich.

Bei dieser Ausbildung ist also das gemeinsame Kronenrad der drei Getriebestufen des Planetengetriebes einstückig mit dem Statorgehäuse 85 ausgebildet, so daß sich eine Gewichtseinsparung ergibt und weniger einzelne Teile vorliegen.

Zur Verminderung der Reibung zwischen den einzelnen Getriebestufen ist jeweils zwischen dem in der Fig. 4 links gelegenen Stirnende des Sonnenrades und dem nächstgelegenen Teil, beispielsweise dem nächsten Sonnenrad oder im Falle der dritten Getriebestufe dem Radialflansch des Antriebszahnrads 30 eine frei bewegliche Lagerscheibe 36 angeordnet.

Wie vorstehend bereits erwähnt, ist das Antriebszahnrad 30 drehfest mit dem Ausgang der dritten Getriebestufe des Untersetzungsgetriebes 31 verbunden. Dieses Antriebszahnrad 30 besteht aus einem hohlzylindrischen Körper, dessen Achse die Drehachse des Antriebszahnrads 30 ist. An der in der Fig. 4 rechten Stirnseite ist dieser hohlzylindrische Körper mit einem bereits vorstehend erwähnten radialen Flansch abgeschlossen, in dem einerseits die Lagerzapfen 48 der Planetenräder 46 der dritten Getriebestufe gelagert sind und der andererseits mittels der Bolzen 47 mit dem Planetenträger 45 dieser dritten Getriebestufe drehfest verbunden ist. Angrenzend an diesen radialen Flansch ist der hohlzylindrische Körper 27 des Antriebszahnrads 30 mittels des Wälzlagers 91 drehbar in der das Statorgehäuse 85 durchsetzenden Bohrung und konzentrisch zu deren Achse, jedoch exzentrisch zur Außenumfangsfläche des Statorgehäuses 85 gelagert. Der in der Fig. 4 links von dem Wälzlager 91 gelegene Teil des Antriebszahnrades 30 ist mit einer Außenverzahnung 29 versehen, die mit dem Innenzahnkranz 12 des Rollenkörpers 10 kämmend in Eingriff steht.

Im Innenraum des hohlzylindrischen Körpers des Antriebszahnrades 30 ist eine als mechanische Rollenreibungsbremse ausgestaltete Bremse angeordnet, welche das Antriebszahnrad 30 in definierter Weise gegenüber der Basis 2 abbremst. Wie in der Fig. 4 zu sehen ist, stützt sich das axial nach rechts ragende Ende des Lagerzapfens 76 mit einem Umfangsflansch am inneren Laufring des Wälzlagers 92 ab. An der in der Fig. 4 rechten Flanke dieses Umfangsflansches stützt sich seinerseits eine ringförmige Tellerfeder 53 ab, die mit ihrem Außenumfang gegen eine den Lagerzapfen frei drehbar umgebende Bremsscheibe 51 drückt, die mit ihrem Außenumfang drehfest, jedoch axial verschieblich mit der Innenseite des hohlzylindrischen Körpers 27 des Antriebszahnrads 30 verbunden ist. Eine zweite Bremsscheibe 50 ist parallel und im Abstand zur Bremsscheibe 51 mittels eines Vierkantansatzes 74 drehfest, jedoch axial geringfügig verschieblich mit dem Lagerzapfen 76 verbunden. Zwischen den beiden Bremsscheiben 50, 51 und der Bremsscheibe 50 und der inneren Radialfläche des radialen Flansches des Antriebszahnrads 30 sind jeweils umfangsmäßig verteilt eine Vielzahl von Bremsrollen 52 angeordnet, die durch die Tellerfeder 53 in vorbestimmter Weise eingeklemmt sind und dadurch für die vorbestimmte Bremskraft sorgen. Eine derartige Rollenreibungsbremse ist an sich nach Funktion und Aufbau bekannt und bedarf daher für den Fachmann keiner weiteren Erläuterungen.

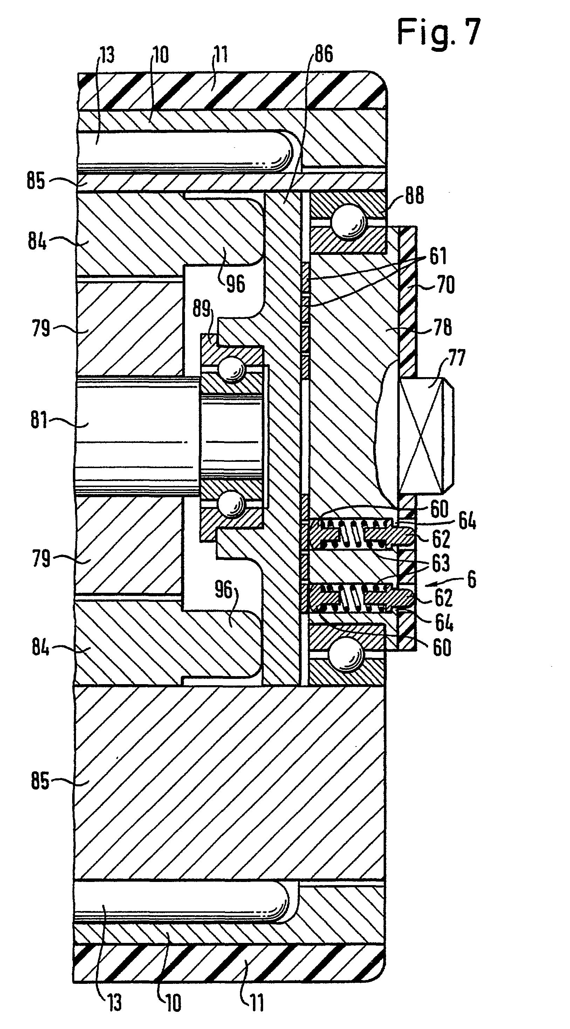

In der Fig. 7, die eine vergrößerte Teildarstellung des rechten Endes der Antriebsrolleneinheit der Fig. 4 darstellt, ist die Anordnung zur Stromzuführung für die Statorwicklung der Elektromotoranordnung erkennbar.

Der drehfest mit dem Statorgehäuse und damit auch mit dem Statorkörper verbundene Lagerflansch 86 trägt auf seiner in der Fig. 7 rechten Stirnseite vier konzentrische und zu der Drehachse des Wälzlagers 88 konzentrische Kontakt Schleifringe, die voneinander sowie auch von dem Lagerflansch 86 und der Lagerscheibe 78 isoliert sind. Jeder dieser Schleifringe 61 ist mit einem zugehörigen Anschluß der Statorwicklung 96 elektrisch leitend verbunden. In der Lagerscheibe 78 sind vier axial verlaufende Durchgangsbohrungen derart geformt, daß jede von ihnen sich jeweils zu einem der Schleifringe hin öffnet. In jeder dieser Durchgangsbohrungen sind zwei Kontaktkörper 60, 62 axial verschiebbar angeordnet und gegeneinander durch eine Feder 63 derart vorgespannt, daß jeweils der innere Kontaktkörper 60 gegen den zugeordneten Schleifring gedrückt wird, während der äußere Kontaktkörper 62 axial nach außen durch eine zugeordnete Bohrung in einer elastischen isolierenden Dichtungsplatte 70 gedrückt wird, die auf der in der Fig. 7 rechten Stirnfläche der Lagerscheibe 78 befestigt ist.

Das jeweils äußere Ende der die Lagerscheibe 78 durchsetzenden Bohrungen ist mit einem radial einwärts ragenden Bund 64 geformt, an dem sich ein Umfangsflansch der äußeren Kontaktkörper 62 abstützen kann, so daß die äußeren Kontaktkörper 62 durch die Einwirkung der Feder 63 nicht völlig aus den Bohrungen der Lagerscheibe 78 herausgedrückt werden können. Selbstverständlich sind alle Kontaktkörper 60, 62 gegen die Lagerscheibe 78 isoliert, während jeweils ein Kontaktkörper 60 mit dem zugehörigen Kontaktkörper 62 innerhalb derselben Bohrung elektrisch leitend verbunden ist.

Es ist anzumerken, daß in der Fig. 7 der Zeichnung nur zwei Kontaktanordnungen für zwei Schleifringe 61 dargestellt sind. Die beiden anderen Kontaktanordnungen für die restlichen Schleifringe 61 sind bezüglich des Umfangs der Lagerscheibe 78 im Winkel versetzt angeordnet, und daher in der Schnittdarstellung der Fig. 7 nicht sichtbar.

Wenn eine Antriebsrolleneinheit mit der beschriebenen Kontaktanordnung in das als Basis 2 dienende Profil einer Rollenförderbahn eingesetzt ist (siehe Fig. 4) stellen die äußeren Kontaktkörper 62 einen elektrischen Kontakt mit in Längsrichtung der Rollenförderbahn verlaufenden Kontaktschienen her, wie es in der gleichzeitig eingereichten Patentanmeldung der gleichen Anmelderin mit dem Titel "Rollenförderbahn" beschrieben ist. Beim Einsetzen der Antriebsrolleneinheit in das Profil der Rollenförderbahn wird dabei die Dichtungsplatte 60 in ihrer Dicke derart zusammengedrückt, daß die äußeren Enden der Kontaktkörper 62 nach rechts in der Fig. 7 über die Oberfläche der Dichtplatte 70 hinausragen und in elektrisch leitende Berührung mit den Kontaktschienen der Rollenförderbahn gelangen. Die elastische Dichtplatte bewirkt dabei eine sichere Abdichtung der Kontaktkörper 62 gegen das Eindringen von Schmutz oder Feuchtigkeit.

Die bei dem vorstehenden Ausführungsbeispiel der Erfindung beschriebene Elektromotoranordnung ist vorzugsweise als Drehstrom-Asynchronmotor mit einem Käfigläufer als Rotor 80 ausgestattet.

**Patentansprüche**

1. Antriebsrolleneinheit zum Antrieb von Gegenständen (100) auf einer Förderbahn, mit einer von einer Elektromotoranordnung (8) über eine Getriebeanordnung (3) drehend antreibbaren Antriebsrolle (1), welche drehbar an einer Führungseinrichtung gelagert ist, mittels der sie bezüglich einer Basis (2) zwischen einer unteren Ruhestellung und einer oberen Antriebsstellung, in der sie mit der Unterseite des anzutreibenden Gegenstands (100) im Eingriff steht, bewegbar ist, wobei die Getriebeanordnung (3) ein von der Elektromotoranordnung (8) antreibbares Antriebszahnrad (30) umfaßt, das mit einer an der Antriebsrolle (1) drehfest angebrachten Verzahnung (12) kämmt, und wobei die Drehachse des Antriebszahnrads (30) bezüglich der Basis (2) ortsfest angeordnet ist, dadurch **gekennzeichnet,** daß die Antriebsrolle (1) im wesentlichen als hohler Kreiszylinder ausgebildet ist, daß die Elektromotoranordnung (8) und die Getriebeanordnung (3) im Inneren der hohlzylindrischen Antriebsrolle (1) angeordnet sind, daß der Rotor (80) der Elektromotoranordnung (8) mit dem Antriebszahnrad (30) zu dessen Antrieb gekoppelt ist, daß die Statoranordnung (82) der Elektromotoranordnung (8) als Führungseinrichtung eine kreiszylindrische Außenumfangsfläche besitzt, die exzentrisch zur Drehachse des Antriebszahnrads (30) angeordnet ist und den Rotor (80) umgibt, daß die hohlzylindrische Antriebsrolle (1) auf der Außenumfangsfläche der Statoranordnung (82) konzentrisch zu dieser drehbar gelagert ist, und daß an der Innenseite der hohlzylindrischen Antriebsrolle (1) ein dazu konzentrischer Innenzahnkranz (12) drehfest angebracht ist, welcher mit dem dazu exzentrischen Antriebszahnrad (30) kämmt und von diesem gleichsinnig angetrieben ist.

2. Antriebsrolleneinheit nach Anspruch 1, dadurch **gekennzeichnet,** daß der Rotor (80) über ein Untersetzungsgetriebe (31) mit dem Antriebszahnrad (30) gekoppelt ist.

3. Antriebsrolleneinheit nach Anspruch 2, dadurch **gekennzeichnet,** daß das Untersetzungsgetriebe (31) ein mit drei in Richtung der Drehachse des Antriebszahnrads (30) axial aufeinanderfolgenden Getriebestufen ausgebildetes Planetengetriebe ist.

4. Antriebsrolleneinheit nach einem der vorhergehenden Ansprüche, dadurch **gekennzeichnet,** daß eine das Antriebszahnrad (30) bezüglich der Basis (2) bremsende Bremse (7) vorgesehen ist.

5. Antriebsrolleneinheit nach Anspruch 4, dadurch **gekennzeichnet,** daß die Bremse (7) als mechanische Rollenreibungsbremse ausgebildet ist.

6. Antriebsrolleneinheit nach einem der vorhergehenden Ansprüche, dadurch **gekennzeichnet,** daß die Statoranordnung (82) aus einem die Statorwicklung (96) enthaltenden, zum Rotor (80) koaxial und rotationssymmetrisch ausgebildeten Statorkörper (84) und einem diesen umschließenden, exzentrisch zum Rotor (80) geformten Statorgehäuse (85) besteht, auf dessen im Querschnitt kreisförmiger Umfangsoberfläche die Antriebsrolle (1) gelagert ist.

7. Antriebsrolleneinheit nach Anspruch 6, dadurch **gekennzeichnet,** daß das Statorgehäuse (84) von einer axialen, exzentrischen Bohrung durchsetzt ist, in der einerseits der Statorkörper (84) aufgenommen ist, während der freie Teil der Innenwand dieser Bohrung mit einer Innenverzahnung (94) versehen ist, die als Kronenrad des Untersetzungsgetriebes (31) dient.

8. Antriebsrolleneinheit nach einem der vorhergehenden Ansprüche, dadurch **gekennzeichnet,** daß die Elektromotoranordnung (8) als Drehstromasynchronmotor ausgebildet ist.

9. Antriebsrolleneinheit nach einem der Ansprüche 6 bis 8, dadurch **gekennzeichnet,** daß die Stromzuführung zur Statorwicklung (96) über mehrere konzentrische Schleifringe (61) erfolgt, die mit bezüglich der Basis (2) ortsfesten, federvorgespannten Kontaktkörpern (60) zusammenwirken.

10. Antriebsrolleneinheit nach einem der vorhergehenden Ansprüche, dadurch **gekennzeichnet,** daß die Antriebsrolle aus einem inneren, den Innenzahnkranz (12) und die Lagerlaufflächen der Lager (13) tragenden metallischen Rollenkörper (10) und einem auf dessen Außenumfangsfläche angebrachten Rollenmantel (11) aus abriebfestem Kunststoff, insbesondere aus Styrol-Butadien-Kautschuk mit einer Shore-Härte von etwa 60 Shore-A, besteht.

## Claims

1. A drive roller unit for driving articles (100) on a conveyor track, comprising a drive roller (1) which can be driven in rotation by an electric motor arrangement (8) by way of a transmission arrangement (3) and which is mounted rotatably on a guide means, by means of which it is movable relative to a base (2) between a lower rest position and an upper drive position in which it is in engagement with the underside of the article (100) to be driven, wherein the transmission arrangement (3) includes a drive gear (30) which can be driven by the electric motor arrangement (8) and which meshes with a tooth configuration (12) nonrotatably disposed on the drive roller (1), and wherein the axis of rotation of the drive gear (30) is arranged stationarily relative to the base (2), characterised in that the drive roller (1) is substantially in the form of a hollow circular cylinder, that the electric motor arrangement (8) and the transmission arrangement (3) are disposed in the interior of the hollow-cylindrical drive roller (1), that the rotor (80) of the electric motor arrangement (8) is coupled to the drive gear (30) for driving saw, that the stator arrangement (82) of the electric motor arrangement (8) as a guide means has a circular-cylindrical outside circumferential surface which is arranged in eccentric relationship with the axis of rotation of the drive gear (30) and surrounds the rotor (80), that the hollow-cylindical drive roller (1) is mounted rotatably on the outside circumferential surface of the stator arrangement (82) concentrically with respect thereto, and that disposed nonrotatably at the inside of the hollow-cylindrical drive roller (1) is an internal ring gear (12) which is concentric with respect thereto and which meshes with the drive gear (30) eccentric with respect thereto, and is driven thereby in the same direction.

2. A drive roller unit according to claim 1 characterised in that the rotor (80) is coupled to the drive gear (30) by way of a step-down transmission (31).

3. A drive roller unit according to claim 2 characterised in that the step-down transmission (31) is a planetary transmission provided with three transmission stages which occur in succession axially in the direction of the axis of rotation of the drive gear (30).

4. A drive roller unit according to one of the preceding claims characterised in that there is provided a brake (7) for braking the drive gear (30) relative to the base (2).

5. A drive roller unit according to claim 4 characterised in that the brake (7) is in the form of a mechanical roller friction brake.

6. A drive roller unit according to one of the preceding claims characterised in that the stator arrangement (82) comprises a stator body (84) of rotationally symmetrical configuration, which includes the stator winding (96) and is coaxial with respect to the rotor (80), and a stator housing (85) which is disposed around the stator body and which is formed in eccentric relationship with respect to the rotor (80), the drive roller (1) being mounted on the circumferential surface of the stator housing, said surface being of circular cross-section.

7. A drive roller unit according to claim 6 characterised in that the stator housing (85) has an axial eccentric bore which passes therethrough and in which at one end the stator body (84) is accommodated while the free part of the inside wall of said bore is provided with an internal tooth configuration (94) which serves as the crow wheel of the step-down transmission (31).

8. A drive roller unit according to one of the preceding claims characterised in that the electric motor arrangement (8) is in the form of a three-phase asynchronous motor.

9. A drive roller unit according to one of claims 6 to 8 characterised in that the supply of current to the stator winding (96) is effected by way of a plurality of concentric slip rings (61) co-operating with spring-biased contact bodies (60) which are stationary relative to the base (2).

10. A drive roller unit according to one of the preceding claims characterised in that the drive roller comprises an inner metal roller body (10) which carries the internal ring gear (19) and the bearing running surfaces of the bearings (13), and a roller casing portion (11) which is disposed on the outside circumferential surface of the roller body (10), of wear-resistant plastics material, in particular styrene-butadiene rubber with a Shore hardness of about 60 Shore A.

## Revendications

1. Unité de rouleau d'entraînement destinée à entraîner des objets (100) sur un convoyeur, comportant un rouleau d'entraînement (1) apte à mis en rotation par un dispositif de moteur électrique (8) par l'intermédiaire d'un dispositif d'engrenage (3), ledit rouleau (1) étant monté en rotation sur une installation de guidage grâce à laquelle il est déplaçable par rapport à une base (2), entre une position de repos inférieure et une position d'entraînement supérieure dans laquelle il est en prise avec la face inférieure de l'objet (100) à entraîner, le dispositif d'engrenage (3) comprenant une roue dentée motrice (30) qui est apte à être actionnée par le dispositif de moteur électrique (8) et qui engrène avec une denture (12) placée sur le rouleau d'entraînement (1) en étant solidaire en rotation, et l'axe de rotation de la roue dentée motrice (30) étant monté fixe par rapport à la base (2), caractérisée en ce que le rouleau d'entraînement (1) a essentiellement la forme d'un cylindre circulaire creux, en ce que les dispositifs de moteur électrique (8) et d'engrenage (3) sont placés à l'intérieur du rouleau d'entraînement cylindrique creux (1), en ce que le rotor (80) du dispositif de moteur électrique (8) est relié à la roue dentée motrice (30) pour entraîner celle-ci, en ce que le dispositif de stator (82) du dispositif de moteur électrique (8) possède, comme dispositif de guidage, une surface périphérique extérieure cylindrique circulaire qui est placée de façon excentrique par rapport à l'axe de rotation de la roue dentée motrice (30) et qui entoure le rotor (80), en ce que le rouleau d'entraînement cylindrique creux (1) est monté en rotation sur la surface périphérique extérieure du dispositif de stator (82), concentriquement à celui-ci, et en ce qu'une couronne à denture intérieure (12) concentrique au rouleau d'entraînement cylindrique creux (1) est installée de façon solidaire en rotation sur le côté interne de celui-ci, laquelle couronne à denture intérieure (12) engrène avec la roue dentée motrice (30) excentrique par rapport à celle-ci, et est entraînée par ladite roue dentée motrice dans le même sens.

2. Unité de rouleau d'entraînement selon la revendication 1, caractérisée en ce que le rotor (80) est relié à la roue dentée motrice (30) par l'intermédiaire d'un démultiplicateur (31).

3. Unité de rouleau d'entraînement selon la revendication 2, caractérisée en ce que le démultiplicateur (31) est un engrenage planétaire formé par trois étages d'engrenage se suivant axialement dans la direction de l'axe de rotation de la roue dentée motrice (30).

4. Unité de rouleau d'entraînement selon l'une des revendications précédentes, caractérisée en ce qu'un frein (7) est prévu pour freiner la roue dentée motrice (30) par rapport à la base (2).

5. Unité de rouleau d'entraînement selon la revendication 4, caractérisée en ce que le frein (7) a la forme d'un frein mécanique à friction à galets.

6. Unité de rouleau d'entraînement selon l'une des revendications précédentes, caractérisée en ce que le dispositif de stator (82) se compose d'un corps de stator (84) contenant l'enroulement de stator (96) et formé de façon coaxiale et avec une symétrie de révolution par rapport au rotor (80), et d'un boîtier de stator (85) entourant ledit corps de stator (84), formé de façon excentrique par rapport au rotor (80) et dont la surface périphérique, circulaire en section, supporte le rouleau d'entraînement (1).

7. Unité de rouleau d'entraînement selon la revendication 6, caractérisée en ce que le boîtier de stator (84) est traversé par un alésage axial excentrique qui reçoit d'un côté le corps de stator (84) tandis que l'extrémité libre de la paroi intérieure de cet alésage est munie d'une denture intérieure (94) qui sert de roue de chant du démultiplicateur (31).

8. Unité de rouleau d'entraînement selon l'une des revendications précédentes, caractérisée en ce que le dispositif de moteur électrique (8) a la forme d'un moteur asynchrone triphasé.

9. Unité de rouleau d'entraînement selon l'une des revendications 6 à 8, caractérisée en ce que l'alimentation en courant de l'enroulement de stator (96) se fait par plusieurs bagues collectrices concentriques (61) qui coopèrent avec des corps de contact (60) précontraints par ressort et fixes par rapport à la base (2).

10. Unité de rouleau d'entraînement selon l'une des revendications précédentes, caractérisée en ce que le rouleau d'entraînement est composé d'un corps de rouleau (10) métallique intérieur portant la couronne à denture intérieure (12) et les surfaces de roulement des paliers (13), et d'une jupe de rouleau (11) appliquée sur la surface périphérique extérieure dudit corps de rouleau (10), en matière synthétique résistante à l'abrasion, en particulier d'un caoutchouc styrène-butadiène possédant une dureté d'environ 60 Shore-A.

Fig. 2

Fig. 3

Fig. 1

# Fig. 4

EP 0 300 127 B1

# Fig. 5

# Fig. 6

# Fig. 7

# Fig. 8